# EUROPEAN PATENT APPLICATION

(11) **EP 2 179 965 A1**
(43) Date of publication of application: **28.04.2010**
(21) Application number: 08748440.8
(22) Date of filing: 30.04.2008
(51) Int. Cl.: C01B 33/107, C01B 33/02, C01B 33/03, B01J 8/24

(54) **IMPROVED METHODS AND APPARATUS FOR PRODUCING TRICHLORO-HYDROSILICON AND POLYSILICON**

(30) Priority: 08.08.2007 CN 200710143522
(71) Applicant: Xuzhou Southeast Polysilicon R&D LTD, 306, Building No. 8, Yangshan Road Economy Development District Xuzhou, Jiangsu 221003 (CN); Hualu Engineering & Technology CO. LTD., No. 255, Taiyi Road Xian Shaanxi 710000 (CN)
(72) Inventor: CHEN, Weiping, Jiangsu 221003 (CN)
(74) Representative: Srinivasan, Ravi Chandran
(86) International application number: PCT/CN2008/000881
(87) International publication number: WO 2009/018713

(57) **Abstract**

The present invention relates to an improved process and apparatus for the preparation of trichlorosilane and polycrystalline silicon. During the preparation of polycrystalline silicon, trichlorosilane is prepared by hydrochlorination, comprising a) heating metallurgical silicon to a temperature of 300-500 °C in a powder drying furnace followed by putting it into a reactor; b) gasifying and heating silicon tetrachloride with an external heater to form silicon tetrachloride gas of a temperature of 160-600 °C; c) preheating hydrogen chloride gas to a temperature of 150-300 °C with the external heater; d) preheating hydrogen gas to a temperature of 300-600 °C with a heater; and e) introducing gases from steps b), c) and d) into the reactor with a hydrogen to silicon tetrachloride molar ratio of about 1: 1 to 5: 1 and a hydrogen chloride to silicon tetrachloride molar ratio of about 1: 1 to 1: 20, the reactor being kept at a temperature of about 400-600 °C and under a pressure of about 1.0-3.0 MPa. The process of the present invention can cost-effectively prepare polycrystalline silicon suitable for use in semiconductor industry and solar cells.

## Description

### Technical Field

The present invention relates to an improved process and apparatus for the preparation of trichlorosilane and polycrystalline silicon. Specifically, the present invention relates to a process for the preparation of trichlorosilane by hydrochlorination, comprising the gas-solid catalytic reaction of silicon tetrachloride, hydrogen, hydrogen chloride and metallurgical silicon, during the preparation of polycrystalline silicon.

### Background Art

Polycrystalline silicon is a main material for the manufacture of a substrate for an integrate circuit, a solar cell for the like. It is useful for the preparation of monocrystalline silicon whose deeply processed products are widely used in semiconductor industry as elementary materials for artificial intelligence units, automatic controllers, information processors, photoelectric converters etc. In the meantime, due to energy crisis and requirements of environmental protection, the whole world are actively developing and using renewable energy resources. Solar energy is the most remarkable one of the renewable energy resources, because it is clean, safe and abundant. One method of using solar energy is to convert solar energy to electricity via photovoltaic effect. Silicon solar cell is the most popularly-used, photovoltaic effect-based device. The demand for high-purity polycrystalline silicon is contantly increasing thanks to the development of semiconductor industry and solar cell.

Polycrystalline silicon may be classified into metallurgical-grade polycrystalline silicon, solar-grade polycrystalline silicon and electronic-grade polycrystalline silicon, in regard to its purity. Metallurgical-grade (MG) polycrystalline silicon typically comprises more than 90-95 %, up to more than 99.8 % at the most, of Si. The purity of solar-grade (SG) polycrystalline silicon is between that of metallurgical-grade silicon and that of electronic-grade silicon, which has not been clearly defined yet. An Si content of 99.99-99.9999 % is generally accepted. Electronic-grade (EG) polycrystalline silicon typically comprises more than 99.9999 % of Si, with an ultrahigh purity of up to 99.9999999-99.999999999 %. The electroconductivity is between 10⁻⁴ to 10¹⁰ ohms·cm.

Solar-grade and electronic-grade polycrystalline silicon can be prepared from metallurgical-grade polycrystalline silicon by a basic process comprising steps of: converting solid metallurgical silicon to a liquid compound existing within an acceptable temperature range, for example, converting metallurgical-grade silicon to chlorosilane, then deeply purifying the chlorosilane by a highly efficient rectification method to remove impurities therefrom, subsequently reducing the purified chlorosilane to silicon with hydrogen, wherein the resulting silicon is in the form of polycrystalline silicon. Currently, the impurity content will be successfully reduced to a level meeting the requirements of solar-grade and electronic-grade polycrystalline silicon only if a rectification method is employed.

In industrial application, there are three techniques for obtaining high-purity solar-grade or electronic-grade polycrystalline silicon: trichlorosilane reduction, silane thermolysis and silicon tetrachloride reduction. The first two are the most important. The trichlorosilane reduction was invented by Siemens Germany in 1954, hence also called the Siemens method, which is a widely used technique for the preparation of high-purity polycrystalline silicon. The chemical reaction equation is as follows:

Si+ 3HCl→ SiHCl₃ + H₂ (1)

This reaction produces not only trichlorosilane for the preparation of high-purity polycrystalline silicon but also some by-products, such as silicon tetrachloride and dichlorodihydro silicon (SiH₂Cl₂). A mixture of the products of above-mentioned reaction is treated by crude distillation and rectification processes to obtain a trichlorosilane-containing stream with a significantly decreased impurity content. Subsequently, said trichlorosilane-containing stream is subjected to a reduction reaction with high-purity hydrogen gas on a heated high-purity polycrystalline silicon chip and a newly formed high-purity polycrystalline silicon is deposited on the silicon chip by chemical vapor deposition. In another embodiment, a high-purity polycrystalline silicon powder is put in a heated fluidized bed, and said trichlorosilane-containing stream and high-purity hydrogen gas are introduced to allow the deposition of the newly formed polycrystalline silicon on the silicon powder, to form particulate high-purity polycrystalline silicon. The reaction equation is as follows:

2SiHCl₃ + H2 → Si+ 2HCl+ SiCl₄ + H₂ (2)

Likewise, this reaction produces not only high-purity polycrystalline silicon but also some by-products, such as silicon tetrachloride and hydrogen chloride. Thus, a large quantity of tail gas is discharged during the production of polycrystalline silicon. For example, the production of 1 ton of polycrystalline silicon is accompanied with production of about 10-20 tons of silicon tetrachloride and about 1-5 tons of hydrogen chloride. Silicon tetrachloride is easily hydrolyzed to produce hydrochloric acid but hardly transported and disposed. Hydrogen chloride will cause acid pollution. Therefore, disposal of the by-products is currently a choke point of the production of polycrystalline silicon.

Currently, the improvements of the Siemens method mainly relate to the comprehensive uses of silicon tetrachloride.

One comprehensive use is the production of gas-phase white carbon black. This production forms a large quantity of waste acid and is thus not an environmentally friendly disposal method. In addition, the amount of silicon tetrachloride as disposed is limited by the demand for gas-phase white carbon black. As long as the demand for gas-phase white carbon black decreases, the silicon tetrachloride that has not been disposed has to be trashed.

Thus, the most effective method of comprehensively using silicon tetrachloride is recycling silicon tetrachloride back into the preparation of polycrystalline silicon. One method brought forward therefor is the thermohydrogenation of silicon tetrachloride, comprising hydrogenating gas-phase silicon tetrachloride in a hydrogenation furnace of about 1250 °C to form trichlorosilane and hydrogen chloride. The converted trichlorosilane is useful for the production of polycrystalline silicon, thereby enhancing utilization of the materials for polycrystalline silicon production while reducing production cost. However, this method has a low primary conversion rate of about 15 %. Thus, the effect on the reduction of production cost is limited.

Another method is hydrochlorination of silicon tetrachloride, wherein the gas-solid catalytic reaction of silicon tetrachloride, hydrogen, hydrogen chloride and metallurgical silicon takes place in a fluidized bed to produce gas-phase trichlorosilane. The converted trichlorosilane is useful for the production of polycrystalline silicon, thereby enhancing utilization of the materials for polycrystalline silicon production while reducing production cost. This method has a relatively high conversion rate and thereby the potential of further development.

CN1436725A discloses a process for the production of trichlorosilane by hydrogenation of silicon tetrachloride, wherein the gas-solid catalytic reaction of silicon tetrachloride, hydrogen and metallurgical silicon takes place in a fluidized bed reactor having a liner inductive heater. It solves the disposal problem of the silicon tetrachloride by-product in the Siemens method, and allows for large scale production of polycrystalline silicon. However, this process fails to consider the disposal of other by-products and the wear problem of the liner inductive heater.

US2004/0047797 discloses an improved process for the production of high-purity silicon, comprising reacting metallurgical silicon with silicon tetrachloride, hydrogen and hydrogen chloride, to obtain a gas stream comprising trichlorosilane, removing impurities from the gas stream, disproportionating the trichlorosilane to produce silicon tetrachloride and tetrahydrosilicon, and thermal decomposing the tetrahydrosilicon to produce high-purity silicon. The final step of this method uses the thermolysis of tetrahydrosilicon to produce high-purity silicon. However, the method can hardly be industrialized because of the difficulty in tetrahydrosilicon preparation. In the meantime, the preparation of tetrahydrosilicon makes the energy consumption of the method overly high, hence affecting production cost of polycrystalline silicon.

WO03/040036 discloses a process for the preparation of silicon, in which formation of the silicon tetrachloride by-product is reduced by controlling temperature of the reducing step and optionally controlling the molar ratio of trichlorosilane to hydrogen feeding to the reducing step. Since this process increases reduction temperature in Siemens method, the energy consumption is increased.

CN1403372A discloses a process for the preparation of polycrystalline silicon using a mixture of trichlorosilane and silicon tetrachloride, comprising purifying the product mixture of the trichlorosilane synthesizing step such that trichlorosilane and silicon tetrachloride reach the predetermined purities, and feeding trichlorosilane and silicon tetrachloride with the predetermined purities to the reducing step together with high-purity hydrogen. In this process, trichlorosilane and silicon tetrachloride are reduced to polycrystalline silicon. However, the reduction of silicon tetrachloride to polycrystalline silicon is slower than that of trichlorosilane to polycrystalline silicon. Generally, under the same reaction conditions, the yield of polycrystalline silicon converted from trichlorosilane is about 5 folds of that converted from silicon tetrachloride. Thus, the higher the silicon tetrachloride concentration is in the mixture, the slower the speed of formation of polycrystalline. Consequently, the presence of silicon tetrachloride decreases the efficiency of the whole process.

It is thus required to improve the polycrystalline silicon preparation processes, to increase the efficiency of the processes by recycling of various by-products in the processes, and to decrease the energy consumption of the processes by recycling of the heat energy.

### Contents of the Invention

Thus, having thoroughly investigated the hydrochlorination method used for polycrystalline silicon preparation, the inventors arrive at this invention, which meets the above-mentioned requirements.

One aspect of the present invention is to provide a process for preparation of trichlorosilane by hydrochlorination during polycrystalline silicon preparation, comprising putting metallurgical silicon into a reactor, and introducing gasified silicon tetrachloride, hydrogen and hydrogen chloride into the reactor with a hydrogen to silicon tetrachloride molar ratio of about 1:1 to 5:1 1 and a hydrogen chloride to silicon tetrachloride molar ratio of about 1:1 to 1:20, the reactor being kept at a temperature of about 400-600 °C and under a pressure of about 1.0-3.0 MPa.

Another aspect of the present invention is to provide a process for the preparation of polycrystalline silicon, comprising:
a) putting metallurgical silicon into a reactor, introducing gasified silicon tetrachloride, hydrogen and hydrogen chloride into the reactor with a hydrogen to silicon tetrachloride molar ratio of about 1:1 to 5:1 and a hydrogen chloride to silicon tetrachloride molar ratio of about 1:1 to 1:20, the reactor being kept at a temperature of about 400-600 °C and under a pressure of about 1.0-3.0 MPa;
b) removing impurities from the product steam obtained from step a) using a multistage distillation column, and distilling the purified product stream to divide it into a primarily silicon tetrachloride-containing stream and a primarily trichlorosilane-containing stream, wherein the primarily silicon tetrachloride-containing stream is recycled back to step a);
c) introducing said trichlorosilane-containing stream and hydrogen into a reduction furnace, where polycrystalline silicon is produced; and
d) condensing and separating the tail gas from step c), wherein the primarily hydrogen-containing stream in the uncondensed portion is recycled back to step c), and the primarily hydrogen chloride-containing stream back to step a), the primarily unreacted trichlorosilane-containing stream in the condensate is recycled back to step c), and the primarily silicon tetrachloride-containing stream back to step a).

In a preferred technical solution of the present invention, a process for the preparation of trichlorosilane by hydrochlorination during the preparation of polycrystalline silicon is provided, which comprises:
a) heating metallurgical silicon to a temperature of 300-500 °C in a powder drying furnace followed by putting it into a reactor;
b) gasifying and heating silicon tetrachloride with an external heater to form silicon tetrachloride gas of a temperature of 160-600 °C;
c) preheating hydrogen chloride gas to a temperature of 150-300 °C with the external heater;
d) preheating hydrogen gas to a temperature of 300-600 °C with a heater; and
e) introducing the gases from steps b), c) and d) into the reactor, wherein a hydrogen to silicon tetrachloride molar ratio is about 1: 1 to 5: 1 and a hydrogen chloride to silicon tetrachloride molar ratio about 1: 1 to 1: 20, the reactor is kept at a temperature of about 400-600 °C and under a pressure of about 1.0-3.0 MPa.

In another preferred technical solution, a process for the preparation of polycrystalline silicon is provided, which comprises:
a) heating metallurgical silicon to a temperature of 300-500 °C in a powder drying furnace followed by putting it into a reactor;
b) gasifying and heating silicon tetrachloride with an external heater to form silicon tetrachloride gas of a temperature of 160-600 °C;
c) preheating hydrogen chloride gas to a temperature of 150-300 °C with the external heater;
d) preheating hydrogen gas to a temperature of 300-600 °C with a heater;
e) introducing the gases from steps b), c) and d) into the reactor, wherein a hydrogen to silicon tetrachloride molar ratio is about 1: 1 to 5: 1 and a hydrogen chloride to silicon tetrachloride molar ratio about 1: 1 to 1: 20, the reactor is kept at a temperature of about 400-600 °C and under a pressure of about 1.0-3.0 MPa.
f) remove impurities from the product steam obtained from step e) using a multistage distillation column, and distilling the purified product stream to divide it into a primarily silicon tetrachloride-containing stream and a primarily trichlorosilane-containing stream, wherein the primarily silicon tetrachloride-containing stream is recycled back to step e);
g) introducing said primarily trichlorosilane-containing stream and hydrogen into a reduction furnace, where polycrystalline silicon is produced; and
h) condensing and separating the tail gas from step g), and recycling the primarily hydrogen-containing stream in the uncondensed portion back to step g), and the primarily hydrogen chloride-containing stream back to step e), recycling the primarily unreacted trichlorosilane-containing stream in the condensate back to step g), and the primarily silicon tetrachloride-containing stream back to step e).

A further aspect of present invention relates to an apparatus for the above-mentioned process.

### Description of the Drawing

The present invention can be more clearly comprehended in reference to the drawing.

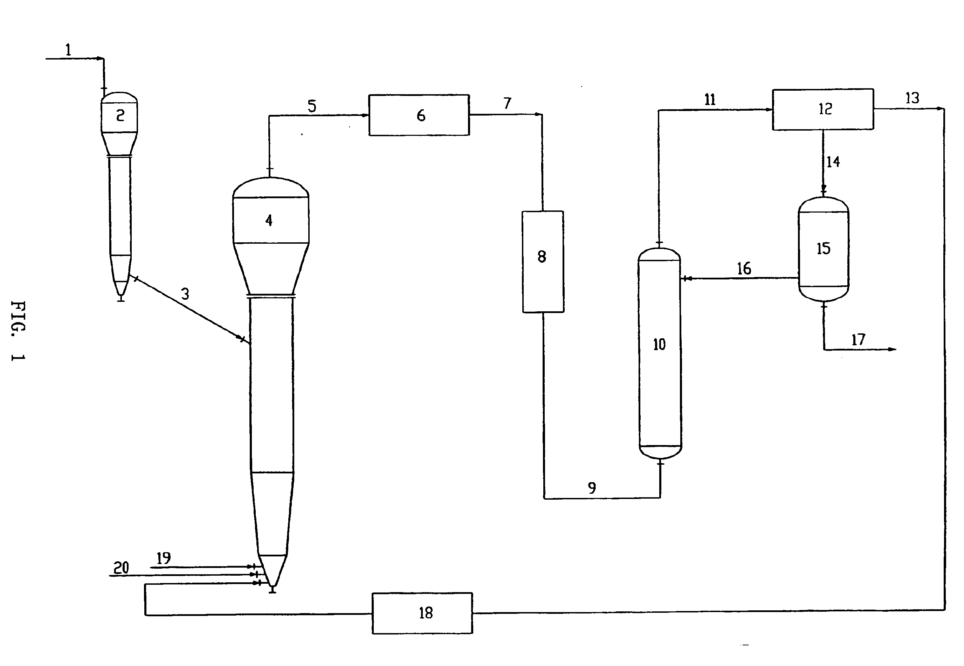

Fig. 1 is a general view of the process of the present invention for the preparation of trichlorosilane by hydrochlorination.

### Specific Embodiments

The process of the present invention for the preparation of trichlorosilane by hydrochlorination is described below in reference to Fig. 1.

An apparatus for the preparation of trichlorosilane comprises a powder drying furnace 2, a fluidized bed reactor 4, a cyclone separator 6, a heat recovery unit 8, a washing column 10 and a condensation recovery unit 12.

The fluidized bed reactor 4 of the present invention generally consists of three sections, i.e. a gas separation section at the upper section, a reaction section in the middle section and a feeding section at the lower section, wherein the gas separation section has a greater diameter than the reaction section, and has an outlet disposed in the top, and gas inlets for hydrogen chloride, silicon tetrachloride and hydrogen and an inlet for silicon powder are disposed in the feeding section, wherein said gas inlets are located under a gas distribution plate of the reactor, while the inlet for silicon powder is located above the gas distribution plate.

Metallurgical silicon enters the powder drying furnace 2 via a conduit 1, and is dried in the powder drying furnace. The treated metallurgical silicon is added into the fluidized bed reactor 4 through a conduit 3; hydrogen enters the fluidized bed reactor 4 through a heat exchanger 18; heated hydrogen chloride gas enters the fluidized bed reactor 4 through a conduit 19; gasified and heated silicon tetrachloride gas enters the fluidized bed reactor 4 through a conduit 20; the reactor is kept at a predetermined temperature and pressure in order to facilitate the reaction of the above-mentioned materials in the fluidized bed reactor 4. The reaction procedure is principally:

Si + 3HCl→ SiHCl₃ + H₂ (1)

SiCl₄ + H₂→ SiHCl₃ + HCl (3)

The metallurgical silicon used in the present invention is a powder, preferably having an average particle size of about 200 microns and a purity of above 98 %. In one preferred embodiment, metallurgical silicon is heated to 400-600 °C, preferably 300-500 °C, in a powder drying furnace. In another preferred embodiment, the metallurgical silicon is mixed with a catalyst, and the mixture is added into a powder drying furnace 2 in which the metallurgical silicon is dried and the catalyst is activated with hot hydrogen. Then, the treated mixture is added into the fluidized bed reactor 4 through the conduit 3.

Preferred catalysts are nickel catalysts and/or palladium catalysts.

Hydrogen is preheated to about 300-600 °C with the heat exchanger 18. Said hydrogen may comprise the hydrogen recovered from the polycrystalline preparation process.

Silicon tetrachloride is gasified and heated to form silicon tetrachloride gas of a temperature of about 160-600 °C. It should be ensured that silicon tetrachloride is added into the fluidized bed reactor 4 in the form of a gas. Otherwise, liquid silicon tetrachloride will cause conglomeration of metallurgical silicon powder in the reactor, resulting in local overheat and damage to the apparatus. Said silicon tetrachloride may be a by-product of polycrystalline silicon preparation. In the preferred technical solutions of the present invention, an external heater is preferably used for gasifying and heating silicon tetrachloride.

Hydrogen chloride gas may be at room temperature (25 °C), but preferably preheated to about 100-500 °C, most preferably about 150-300 °C. Said hydrogen chloride gas may be a by-product produced during the preparation of polycrystalline silicon. In the preferred technical solutions of the present invention, an external heater is preferably used for preheating hydrogen chloride gas.

Hydrogen, hydrogen chloride and silicon tetrachloride gases are preheated first and then added into the fluidized bed reactor 4, to avoid absorption of the heat from the fluidized bed reactor 4 by these materials, which helps to maintain reaction conditions of the fluidized bed reactor 4 and thus facilitates the increase in reaction yield. It is preferred in present invention to use an external heating manner to preheat the materials to above-mentioned higher temperatures, because the external heating manner allows heating by a safe and reliable, explosion-proof electric heater, and thus avoids the problems caused by a fluidized bed reactor having a liner inductive heater, i.e. strict requirements on the materials of the reactors and difficulties in choosing the explosion-proof inductive unit.

Reaction equation (1) is an exothermic reaction, and reaction equation (3) is an endothermic reaction. Therefore, even a small amount of hydrogen chloride added into the fluidized bed reactor 4 will affect the reaction conditions in the reactor. The use of an external heater for preheating the reaction gases can more easily control reaction temperature in the reactor to match the amount of hydrogen chloride as added, such that control of the reaction conditions in the reactor will be easier.

For hydrogen, hydrogen chloride and silicon tetrachloride entering the fluidized bed reactor 4, the molar ratio of hydrogen to silicon tetrachloride is about 1:1 to 5:1, preferably about 2:1 to 4:1, and the molar ratio of hydrogen chloride to silicon tetrachloride is about 1:1 to about 1:20, preferably about 1:1 to about 1:10, most preferably about 1:3 to 1:6.

The fluidized bed reactor 4 is kept at a temperature of 400-600 °C and under a pressure of about 1.0-3.0 MPa, preferably at a temperature of 500-600 °C and under a pressure of about 1.5-2.5 MPa.

The fluidized bed reactor 4 is also heated with an external heater, preferably a tubular external electric heater, such that the reaction procedure will be more stable.

In one embodiment of the present invention, the gaseous effluent from the fluidized bed reactor 4 is further treated. For example, the gaseous effluent enters the cyclone separator 6 (which may be a single-stage cyclone separator or a multistage cyclone separator) through the conduit 5, and the unreacted metallurgical silicon brought out by the gaseous effluent is removed by the cyclone separator 6. Gaseous effluent treated by the cyclone separator enters, through the conduit 7, the heat recovery unit 8 (which may be a heat exchanger) where heat from the high-temperature gaseous effluent is recovered. The recovered heat may be used in said heat exchanger 18 or said external heater in order to preheat hydrogen, hydrogen chloride and silicon tetrachloride added into the fluidized bed reactor 4. The gaseous effluent, the heat of which has been recovered, enters washing column 10 through the conduit 9. The washed gaseous effluent enters the condensation recovery unit 12 (which may be a two-stage or multistage condensation recovery unit) through the conduit 11. After condensation and recovery, liquid-phase materials are discharged into a material accumulator tank 15 via a conduit 14, and uncondensed gases (primarily hydrogen) enters the heater 18 through a conduit 13, for recycling back to fluidized bed reactor 4.

It is preferred in the present invention to subject the gaseous products to wet dust removal treatment with the washing column 10. Said gaseous products enter the washing column 10 via gas inlets at the bottom. In said washing column 10, part of liquid-phase materials in the material accumulator tank 15 is introduced via a conduit 16 and through a washing solution inlet at the top of the washing tower 10, as a washing solution. Such washing solution primarily comprises trichlorosilane and silicon tetrachloride, such that fine silicon powder and metal chlorides (particularly aluminum chloride, which may be comprised in the gaseous effluent that has gone through heat recovery), which cannot be removed by the cyclone separator 6, are completely separated and removed via the outlet at the bottom of the washing column 10. The washed gaseous effluent leaves the washing column 10 from the gas outlet at the top and enters the condensation recovery unit 12 through the conduit 11. In addition, the wet dust removal treatment avoids wear and tear of the dust removal apparatus caused by dust in the dry dust removal treatment, and thus will not bring in any foreign impurities. The washing and temperature reducing effects in the wet dust removal treatment are favorable to the following condensing and recovering steps.

Stream in the material accumulator tank 15 primarily comprises trichlorosilane and silicon tetrachloride, which may be introduced into a multistage distillation column through the conduit 17. The process of present invention greatly increases the yield of trichlorosilane and inhibits the formation of silicon tetrachloride.

During the preparation of polycrystalline silicon, impurities are removed from the stream from the conduit 17 with the multistage distillation column, and the purified stream is then divided into a primarily silicon tetrachloride containing stream and a primarily trichlorosilane containing stream, wherein the primarily silicon tetrachloride containing stream is recycled back to the external heater for gasifying and heating silicon tetrachloride. Subsequently, said trichlorosilane containing stream and hydrogen are introduced into a reduction furnace, where polycrystalline silicon is produced. The reaction procedure is principally:

2SiHCl₃ + H₂ → Si+ 2HC1+ SiCl₄ + H₂ (4)

The reduction furnace has common conditions for the Siemens method. The temperature of the reduction furnace is typically 1080-1150 °C. The tail gas discharged from the reduction furnace comprises unreacted trichlorosilane and hydrogen, and the by-products silicon tetrachloride and hydrogen chloride. Said tail gas is condensed in a tail gas condensation recovery unit. Primarily hydrogen containing stream in the uncondensed portion and primarily unreacted trichlorosilane containing stream in the condensate are recycled back to the reduction furnace after purification, the primarily hydrogen chloride containing stream in the uncondensed portion is recycled back to the external heater for heating hydrogen chloride, and the primarily silicon tetrachloride containing stream in the condensate is recycled back to the external heater for gasifying and heating silicon tetrachloride.

Thus, by-products are recycled, and yield of trichlorosilane in the process of present invention is higher, such that cost of polycrystalline silicon production is reduced and environmental pollution lessened. Polycrystalline silicon prepared in this invention meets the purity requirements on electronic-grade or solar-grade in semiconductor industry or solar cell application.

The process of present invention makes efficient use of heat. The fluidized bed reactor 4 is at a high temperature and under a high pressure, and the reaction effluent is still at a high temperature. In this invention, the heat from the high-temperature gaseous effluent is recovered and used for preheating hydrogen, hydrogen chloride and silicon tetrachloride added into the fluidized bed reactor 4. This alone leads to saving of about 250 kwh of electricity for every ton of trichlorosilane as produced and a decreased amount of cooling water as used, hence reducing the running cost of the whole process.

## Claims

1. A process for the preparation of trichlorosilane by hydrochlorination during the preparation of polycrystalline silicon, comprising putting metallurgical silicon into a reactor, and introducing gasified silicon tetrachloride, hydrogen and hydrogen chloride into the reactor with a hydrogen to silicon tetrachloride molar ratio of about 1:1 to 5:1 1 and a hydrogen chloride to silicon tetrachloride molar ratio of about 1: 1 to 1: 20, the reactor being kept at a temperature of about 400-600 °C and under a pressure of about 1.0-3.0 MPa.

2. The process according to claim 1, wherein said hydrogen to silicon tetrachloride molar ratio is 2: 1 to 4: 1, and said hydrogen chloride to silicon tetrachloride molar ratio is 1: 3 to 1: 6.

3. The process according to claim 1, which comprises:
a) heating metallurgical silicon to a temperature of 300-500 °C in a powder drying furnace followed by putting it into a reactor;
b) gasifying and heating silicon tetrachloride with an external heater to form silicon tetrachloride gas of a temperature of 160-600 °C;
c) preheating hydrogen chloride gas to a temperature of 150-300 °C with the external heater;
d) preheating hydrogen gas to a temperature of 300-600 °C with a heater; and
e) introducing the gases from steps b), c) and d) into the reactor.

4. The process according to claim 3, wherein step a) comprises mixing said metallurgical silicon with a catalyst, introducing the mixture into a powder drying furnace where said metallurgical silicon is dried and said catalyst is activated with hot hydrogen, then adding the treated mixture into the reactor.

5. The process according to claim 4, wherein said catalyst is a nickel catalyst and/or a palladium catalyst.

6. The process according to claim 1, wherein said hydrogen comprises hydrogen recovered during polycrystalline silicon preparation, said hydrogen chloride gas is a by-product of polycrystalline silicon preparation, and said silicon tetrachloride is a by-product of polycrystalline silicon preparation.

7. The process according to claim 1, wherein said reactor is a fluidized bed reactor comprising an external heater.

8. The process according to claim 1, which further comprises subjecting the gaseous effluent from the reactor to a wet dust removal treatment.

9. The process according to claim 1, which further comprises subjecting the gaseous effluent from the reactor to a heat recovery treatment.

10. A process for the preparation of polycrystalline silicon, which comprises:
a) preparing trichlorosilane according to the process set forth in any one of claims 1 to 9;
b) removing impurities from the product steam obtained from step a) using a multistage distillation column, and distilling the purified product stream to divide it into a primarily silicon tetrachloride containing stream and a primarily trichlorosilane containing stream, wherein the primarily silicon tetrachloride containing stream is recycled back to step a);
c) introducing said trichlorosilane-containing stream and hydrogen into a reduction furnace, where polycrystalline silicon is produced; and
d) condensing and separating the tail gas from step c), and recycling the primarily hydrogen containing stream in the uncondensed portion back to step c), the primarily hydrogen chloride containing stream in the uncondensed portion back to step a), the primarily unreacted trichlorosilane containing stream in the condensate back to step c), and the primarily silicon tetrachloride containing stream in the condensate back to step a).

11. An apparatus for the preparation of polycrystalline according to the process set forth in claim 10, comprising:
a fluidized bed reactor, for the preparation of trichlorosilane by hydrochlorination;
a multistage distillation column, for removing impurities from the product steam obtained from trichlorosilane preparing step and for distilling the purified product stream to divide it into a primarily silicon tetrachloride containing stream and a primarily trichlorosilane containing stream;
a reduction furnace, for reacting said trichlorosilane-containing stream with hydrogen to produce polycrystalline silicon; and
a tail gas condensation recovery unit, for dividing tail gas into a primarily hydrogen containing stream, a primarily hydrogen chloride containing stream, a primarily unreacted trichlorosilane containing stream and a primarily silicon tetrachloride containing stream.

12. An apparatus for the preparation of trichlorosilane, comprising a powder drying furnace, a fluidized bed reactor, a cyclone separator, a heat recovery unit, a washing column and a condensation recovery unit, wherein the fluidized bed reactor consists of a gas separation section at the upper section, a reaction section in the middle section and a feeding section at the lower section, wherein the gas separation section has a greater diameter than the reaction section, there is an outlet disposed on the top of the gas separation section, gas inlets for hydrogen chloride, silicon tetrachloride and hydrogen and an inlet for silicon powder in the feeding section, wherein said gas inlets for hydrogen chloride, silicon tetrachloride and hydrogen are in communication with a gas distribution plate disposed in the reactor, while the inlet for silicon powder is located above the gas distribution plate.

13. The apparatus according to claim 12, wherein said fluidized bed reactor is heated by an external heater.

14. The apparatus according to claim 12, wherein said external heart is a tubular external electric heater.
